# EUROPEAN PATENT SPECIFICATION

(11) **EP 1 880 822 B1**
(45) Date of publication and mention of the grant of the patent: **11.08.2010**
(21) Application number: 06023661.9
(22) Date of filing: 14.11.2006
(51) Int. Cl.: F16F 1/04, G03G 15/08, B29C 45/33, B29C 45/44

(54) **Wasted toner feeding member consisting of a coiled part formed of plastic material**
Resttonerfördervorrichtung bestehend aus einem gewickelten Kunststoffteil
Dispositif d'avancement de toner de déchets consistant en un membre en spirale en matière plastique

(30) Priority: 18.07.2006 JP 2006195654
(43) Date of publication of application: 23.01.2008
(73) Proprietor: Kabushiki-Kaisya TOSKA, Chiyoda-Ku Tokyo (JP); Kabushiki-Kaisya MECHMOLD, Miyoshicho Irumagun, Saitama-ken (JP)
(72) Inventor: Toyohisa Hiroki, Chiba-ken (JP); Tadashi Suzuki, Saitama-ken (JP)
(74) Representative: Finck, Dieter

(56) References cited:
- JP-A- 2004 160 879
- JP-A- 2005 035 195

## Description

### BACKGROUND OF THE INVENTION

### 1. Field of the Invention

1. The present invention relates to a wasted toner feeding member in the form of a coiled part formed of plastic material by injection molding, wherein the cross section of the coiled part has a polygonal shape having at least one corner portion or a rounded face at a part thereof.

### 2. Description of the Related Art

With respect to manufactured articles using synthetic resinmolded parts such as vehicles and home electric appliances, it has been frequently obliged that a group of synthetic resin parts and a group of metal parts such as springs and metal pieces are segregated from one another and these groups are recycled in respective raw factories.

For example, a synthetic resin bottle in which cosmetic liquid or cleanser is put is generally used as a disposal container. A nozzle having a compact-size pump is provided to the head portion of this bottle, and the head portion of the nozzle is pressed to jet a small amount of liquid in connection with a stroke. This nozzle portion is provided with a compact coil spring of metal such as stainless or the like as an elastic member for restoring a plunger shaft constituting the compact pump. Likewise, metal coil springs are frequently used at portions for restoring movable portions such as arms of various kinds of synthetic resin toys.

After such a bottle is used or when such a toy is broken or made redundant, it is frequently thrown on the scrap heap. Each of these synthetic resin articles is assembled while the main body portion of synthetic resin and metal coil springs are mixed with one another. Accordingly, the scraping of these articles is based on the assumption that the articles are dismantled and segregated into synthetic resin parts and metal parts when they are scrapped.

However, in order to dismantle the nozzle portion constituting the compact pump of the head portion of the bottle, some degree of technical knowledge and a tool are required, and it is difficult for awife or a childtoperformthe dismantling work described above. In addition, this work is also cumbersome to even a man. Accordingly, in most of cases, these articles must be scrapped while the synthetic resin parts of the outline portions such as the main body and the metal parts such as the coil springs are mixed with one another. However, there is a tendency that the scrapping method described above will be severely regulated in the future.

Weight saving of synthetic resin bottles in which liquid is stocked, toys, etc. has been considered, and thus synthetic resin springs has been required to be used in place of metal coil springs. Accordingly, synthetic resin coil springs have been required from the viewpoint of the environmental control when the synthetic resin molded parts are scrapped and also the problem of the weight saving of the bottles and the toys.

The synthetic resin coil spring is manufactured as follows. In general, a slender linear member having a circular cross section is manufactured by the extrusion molding method. Under a softened state of the slender linear member, or after the slender linear member is solidified and then re-heated to set the slender linear member to a softened state, the slender linear member is shaped into a spiral form while wound around the surface of a mandrel comprising a rotating round bar, and the coiled article thus formed is cut by a predetermined length to complete a coil.

However, with respect to synthetic resin coil springs formed by the extrusion molding method, the elasticity of the synthetic resin itself is remarkably lower than that of metal coil springs. Therefore, use of these synthetic resin coil springs as springs is limited, and thus the applicable field of these synthetic resin coil springs is not so broad at present.

For example, JP-A-10-73138 has proposed a synthetic resin coil spring that is designed to have enhanced elastic force. According to this synthetic resin coil spring, plural coil springs which are identical to one another in length, turning direction, diameter and pitch are juxtaposed with one another, rings are arranged at both ends of the springs, and the end portions of the respective coil springs are integrally linked to one another through the rings.

Furthermore,JP-A-9-291955 hasproposed a synthetic resin thin cylinder having a cylindrical wall that is formed in a mesh-shape by forming through holes in the vertical direction and right-and-left direction substantially at equal intervals in the cylindrical wall.

JP-B-7-102591 and Japanese Patent Application No. 2003-275588 are also cited as related art.

With respect to the coil spring formed by winding the extrusion-molded linear member around the surface of the mandrel, the cross-sectional shape thereof is limited to a circular shape, and thus it is substantially difficult to change the cross-sectional shape of the linear member to a cross-sectional shape having a relatively large section modulus such as a rectangular cross-section.

When a linear member having a cross-sectional shape other than a circular cross-section such as a triangular cross-section or a rectangular cross-section is formed by the extrusion molding method and then wound around the mandrel so that the linear member is shaped in the form of a coil (spiral or helical form), it is difficult to accurately guide the linear member in a fixed direction and also the cross-sectional shape is deformed from a predetermined one or permanent set in fatigue occurs at some portion, so that appearance thereof is bad and also it is difficult to manufacture a coil spring having a predetermined spring characteristic. Furthermore, comparing a coiled synthetic resin linear member having a circular cross section and a metal coil spring, the rigidity of the synthetic resin is lower than that of metal such as stainless steel, and thus the synthetic resin coil spring merely exercises remarkably weak spring force for the size thereof.

Furthermore, JP-A-10-73138 proposes the synthetic resin spring having the structure that plural coil springs are integrally assembled by arranging rings at both the end portions of the plural coil springs and also the structure that plural coil springs are integrally assembled by arranging rings at both the end portions and intermediate portions of the coil springs. However, this publication never discloses a method of manufacturing these coil springs, and thus it is unknown what method is used to manufacture the coil springs.

According to the technique disclosed in JP-A-9-291955, the cylindrical mesh member is formed of synthetic resin, and it is compressed in the longitudinal direction. This cylindrical mesh member is used as a compression coil spring of the pump for jetting liquid as described above. This technique has an advantage that when synthetic resin articles such as the liquid jetting pump are segregated and scrapped, it is possible to directly scrap the cylindrical mesh member without segregating it. However, the compression spring described above has the remarkably complicated structure, so that the manufacturing method is cumbersome and also it is difficult to efficiently achieve a spring having predetermined compression strength.

The biggest problem common to synthetic resin spring resides in that the rigidity of synthetic resin, that is, the spring constant is remarkably lower than that of metal. Accordingly, if the spring is designed in a large size in order to compensate for this drawback, the size of the spring is not matched with the application thereof.

With respect to even the coil springs manufactured by using the same material, the elastic force can be dynamically increased by changing the cross section of the spring. For example, even in the case of the same overall size, the elastic force can be increased by changing the circular cross section to a laterally-wide rectangular cross section. Furthermore, when the height of the cross section is set to be larger than the lateral width of the cross section, the section modulus is remarkably increased, and thus the elastic force is further increased. Still furthermore, if reinforcing fiber such as discontinuous fiber of carbon fiber or glass fiber is mixed in synthetic resin as coil springmaterial, it is not so difficult to achieve elastic force near to that of metal.

However, when a flat plate having a rectangular cross section is formed by the extrusion molding method and the flat plate is wound around the surface of the mandrel to form a coil spring, the flat plate is distorted and thus it is difficult tomanufacture a coil spring having an accurate shape. However, in the case of plastic material mixed with carbon fiber or glass fiber as described above, when it is temporarily cooled and solidified, re-working is difficult since the elastic force is enhanced at the shaping step.

In JP -A-2005035195 coiled parts are disclosed which are formed of plastic material by injection molding. The cross sections of the coiled parts have polygonal shapes having at least one corner portion or a rounded face at a part thereof. When coil springs are used as a wasted toner feeding member for a copying machine the pitches might be clogged because of deformation such as twist.

The problem underlying the invention is to provide a wasted toner feeding member for a copying machine or the like which overcomes the drawbacks of the prior art. This problem is solved by a wasted toner feeding member as defined by the features of claim 1. Preferred embodiments are claimed in claims 2 and 3.

Each coil is integrally provided with a projecting spacer along the axial direction so that a gap interval between the coils is kept.

### BRIEF DESCRIPTION OF THE DRAWINGS

Fig. 1 is an exploded perspective view showing a molding device achieved by combining a mold and a slide core;
Fig. 2 is a cross-sectional view taken along a section display line of the molding device shown in Fig. 3;
Fig. 3 is a cross-sectional view of the molding device shown in Fig. 2;
Fig. 4 is a side view showing the relationship between a molding portion and a molded coil spring;
Fig. 5 is an exploded perspective view showing a device achieved by simplifying the molding device shown in Fig. 1;
Fig. 6 is a perspective view showing a coil spring having a flattened section;
Fig. 7 is a perspective view showing a coil spring having a cylindrical body at the center portion thereof;
Fig. 8 is a front view showing a standard coil spring;
Figs. 9A to 9F are cross-sectional views applied to the coil spring of Fig. 8;
Fig. 10 is a perspective view showing a coil spring that can be manufactured by the present invention and has a large width and large elastic force;
Fig. 11 is a perspective view showing a coil spring that can be manufactured by the present invention and has a large width and large elastic force;
Fig. 12 is a perspective view showing a molding device using no slide core;
Fig. 13 is a side view showing a coil spring having hooks formed at both the ends thereof;
Fig. 14 is a diagram showing a dismantled core when the coil spring of Fig. 13 is manufactured;
Fig. 15 is a perspective view showing a coil spring having different diameters and different pitches;
Fig. 16 is a perspective view showing a coil spring provided with a portion which does not function as a coil, the portion being provided at the intermediate portion of the coil spring;
Fig. 17 is a perspective view showing a coil springprovided with a seat or the like at one end, thereof and a support plate or the like at the other end thereof; and
Fig. 18 is a perspective view showing a coil spring according to the invention having a projection as a spacer at a part thereof.

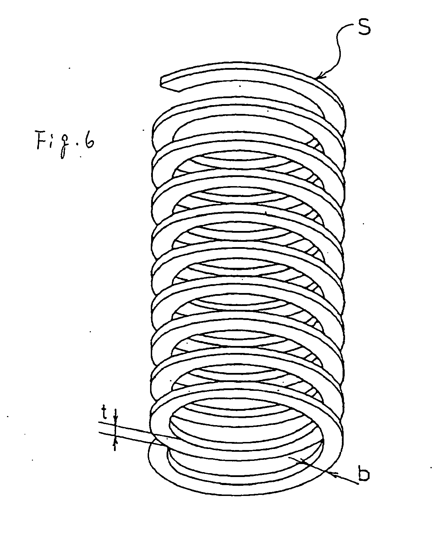

Fig. 6 is a perspective view showing a typical coil spring that can be efficiently manufactured and shows an example of a coil spring manufactured according to injection molding by using synthetic resin such as polypropylene, polyester or polycarbonate which has high elasticity and is used in various industrial applications. The feature of the coil springs thus manufactured is as follows. That is, the coil spring has a thin plate type cross-section of 2mm in thickness t and 5mm in width b and it is designed in a spiral form so as to have an outer diameter of 45mm and a pitch of 7mm. This coil spring can be provided with an excellent spring characteristic based on enhanced elasticity by adopting the flat-plate type section modulus.

In the coil spring achieved by injection-molding the thin plate in the spiral form, it can exercise stable elastic force even under the state in which it is almost compressed. Furthermore, when the coil spring is perfectly compressed, it has an effect that it acts as one cylindrical body. This effect means that the coil spring can be also used as a valve plug for controlling the flow amount of fluid such as liquid or gas.

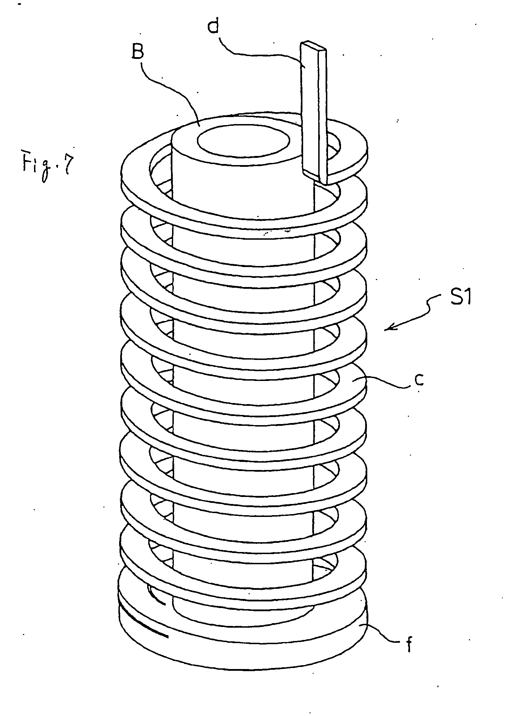

Fig. 7 shows a coil spring S1 that is formed by injection molding so that a coil portion c and a cylindrical body B are arranged concentrically with each other and integral with each other by a flange portion f. A projection piece d usable as a fixing portion is formed at the end portion of the coil portion c. The projection piece d serves as a site for transferring the elastic force of the coil portion c to another member, and the cylindrical body B is usable when a support shaft, a guide member or the like is disposed and used so as to penetrate through the cylindrical body B, for example.

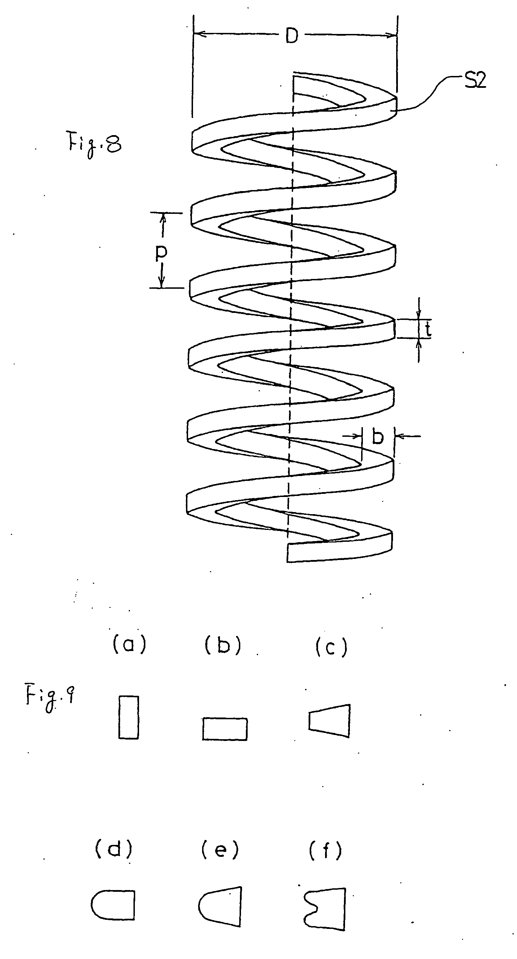

As described above, not only a coil spring but also an integral structure including a coil spring and members having other functions can be simply manufactured. Fig. 8 is a front view showing a standard coil spring S2. The thickness t is set to be relatively large as compared with the outer diameter D and the width b, and further the pitch p is also set to be relatively large. The coil spring of Fig. 8 has a characteristic that an elastically deforming stroke is increased and relatively strong elastic force can be exercised. The conditions such as each kind of stroke and elastic force and the dimension can be arbitrarily designed.

Figs. 9A to 9F show various cross sections of the coil spring S2. Fig. 9A shows a longitudinal beam type cross section, Fig. 9B shows a lateral beam type cross section, Fig. 9C shows a trapezoidal cross section, Figs. 9D and 9E show arch-shaped cross sections, and Fig. 9F show an M-shaped cross section (ribbon type or mountain type cross section). These cross sections are excellent in that the cross section corresponding to the application of the spring can be adopted by actively using the feature of the injection molding unlike the metal coil springs.

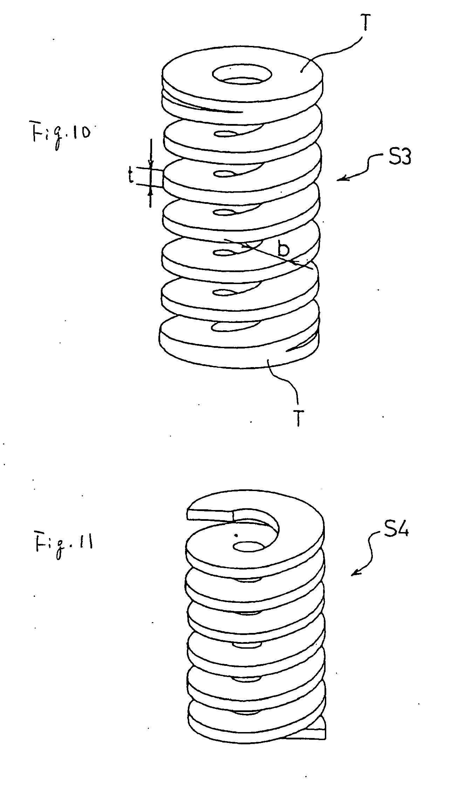

Fig. 10 shows a special coil spring S3 having large spring force. In this coil spring S3, the width b is set to be larger as compared with the thickness t, and also end plates (or support plates) T are formed integrally with the coil spring S3 at both the ends thereof, so that the coil spring S3 can be easily supported under a stable state. When a plurality of structures as described above are stacked and used, they can be used like a long spring.

S4 of Fig. 11 represents a modification of the coil spring S3 shown in Fig. 10, and it shows a simplified coil spring in which the end plates T of the coil spring S3 are omitted. When a plurality of coil springs S4 are used in juxtaposition with one another, they can be used in such a case that pressure is applied to a broad plane.

Next, the molding device will be described.

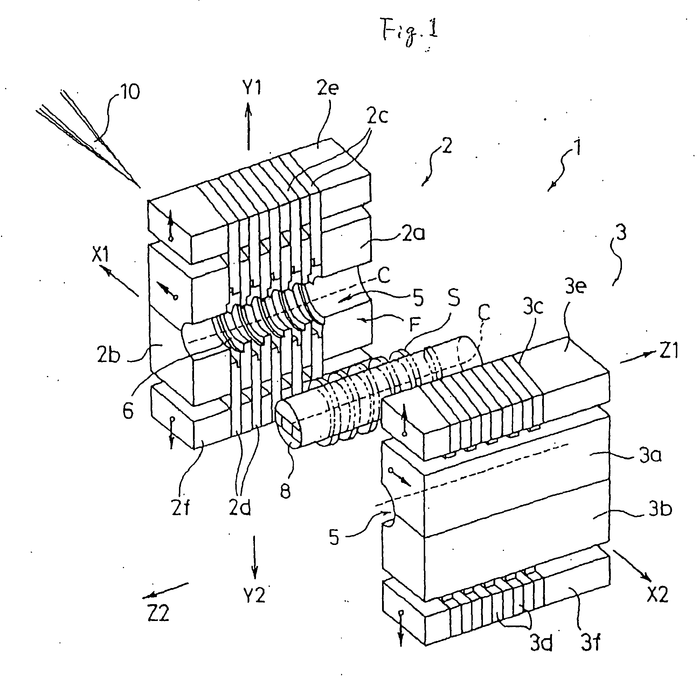

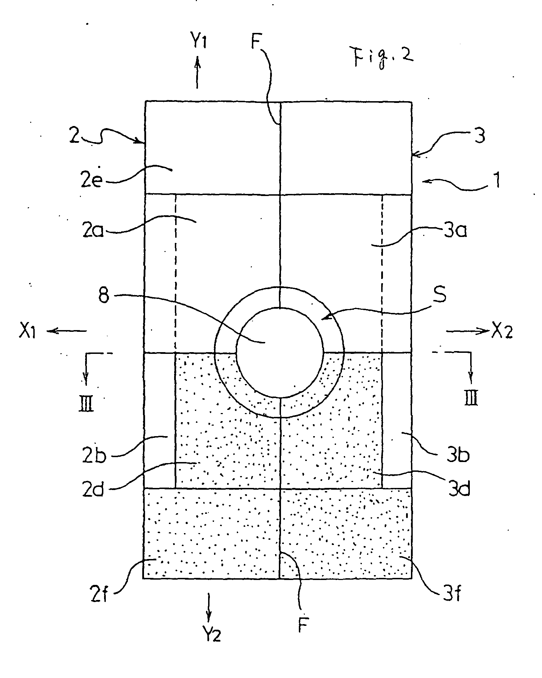

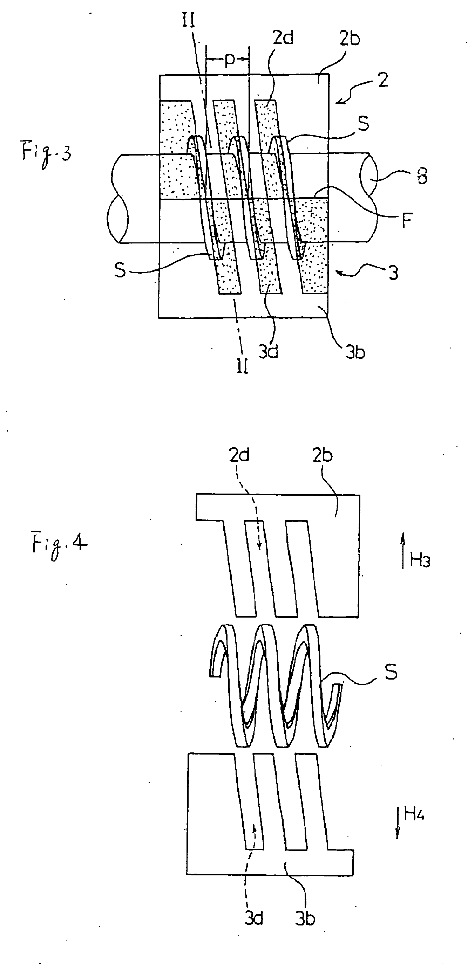

Fig. 1 is a perspective view showing the main part of the molding device to manufacture a coil spring of synthetic resin; Fig. 2 is a cross-sectional view, Fig. 3 is a cross-sectional view showing the relationship of a mold, a slide core and a core, and Fig. 4 is a side view showing a state that the mold is retreated and a target coil spring is taken out after the slide core is removed. In Fig. 4, the core is omitted.

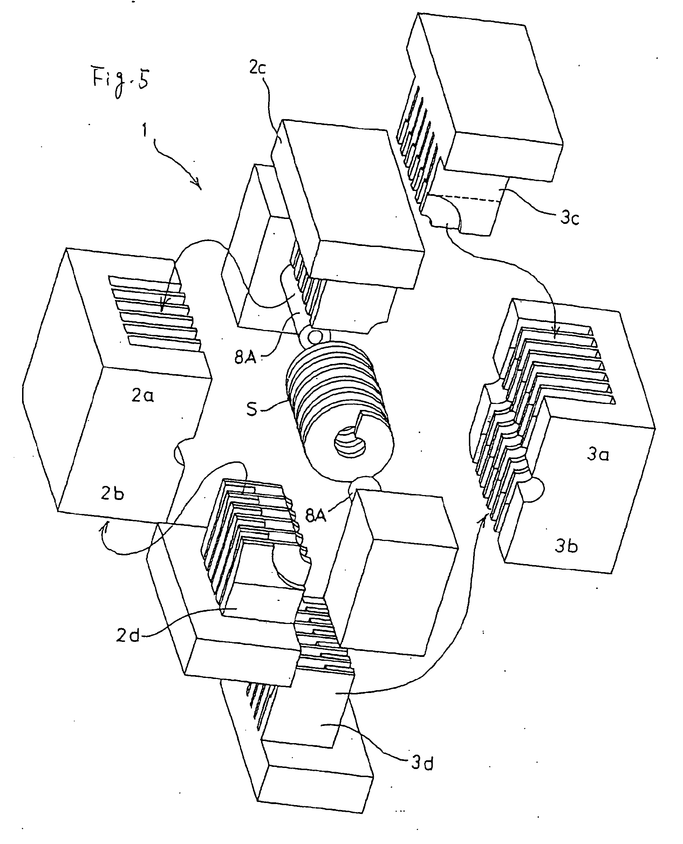

Furthermore, Fig. 5 is an exploded diagram showing the mold member of a device achieved by further embodying the molding device 1 shown in Fig. 1, and portions to be integrated are integrated with one another. A core 8A is divided into two parts at the front and rear sides, whereby a coil spring S as a molded article can be easily taken out.

The molding device 1 according to this embodiment is suitable for manufacturing coil springs whose cross-sectional shapes are the rectangular shape, the flat plate type, the ribbon-shaped type, etc. as shown in Figs. 6 to 11. In this molding device, a coil spring having a rectangular cross section, a flat plate type cross section or the like can be accurately extracted from the mold so that the cross section thereof is not deformed.

For example, with respect to the coil springs having the rectangular cross section, the flat plate type cross section, etc., when a half cavity is formed in each of mating faces of normally-used two molds, there occurs some "undercut portion" which is attached to the mold and thus is not extracted therefrom. The undercut portion means a case where apart of the mold projects to the front side in the extraction direction of the molded article. Accordingly, when a mold is manufactured, it is required to design the mold so that there does not exist any portion to which a molded article hooks because of the relationship between the moving direction of the mold and the extraction direction of the molded article having a complicated inclination surface such as a coil spring.

In this sense, in the molding device 1, a mold member comprising the combination of a first mold (right mold or upper mold) 2 and a second mold (left mold or lower mold) 3 is set as a base structure. The molds 2 and 3 of this base structure move in the lateral directions X1 and X2. Slide cores 2c, 2d, 3c, 3d sliding in directions different from the lateral directions X1, X2, preferably, in the longitudinal directions Y1, Y2 perpendicular to the lateral directions X1, X2 are supported on the molds 2 and 3. The first mold 2 and the second mold 3 are constructed by the molding portions 2a, 2b and 3a, 3b and the slide cores 2c, 2d, 3c, 3d.

The molding device 1 is constructed by the first mold 2 and the second mold 3, and a cavity 6 for forming the coil spring S is formed around a through hole 5 (or recess portions) formed in the mating faces of the molds 2 and 3. A core 8 is disposed in the through hole 5, and the coil spring S is formed by the cavity 6 formed between the core 8 and each of the molds 2, 3.

One or both of the first mold 2 and the second mold 3 are moved away from the core 8 in the direction of an arrow X1, X2 to thereby carry out a mold separating operation. The core 8 is designed in a cylindrical form by combining upper and lower, right and left and central members. The central member is removed, the members at both the sides are removed, and then the upper and lower members having the arcuate surfaces are removed to dismantle the molding device, whereby the molded coil spring S can be taken out.

In this embodiment, in order to facilitate cutting of the curved surface of the coil-spring-shaped (i.e. spiral) cavity 6 of the first and second molds 2 and 3, the two divided mold members (the molding portions 2a, 2b and 3a, 3b) are manufactured, and these mold members are integrated into one member by using a concave/convex fitting portion or a linking plate. The first mold 2 and the second mold 3 are provided with the slide cores 2c, 2d and 3c, 3d moving along the mating faces.

The end portions of the slide cores 2c are integrated with one another by a joint tag 2e, and the end portions of the slide cores 2d are integrated with one another by a joint tag 2f, and they carry out the opening operation all together as indicated by arrows Y1, Y2. This structure is likewise applied to the second mold 3 side.

Accordingly, in the step of molding the coil spring S, the through hole 5 is formed by the first and second molds 2 and 3 and the slide cores 2c, 2d and 3c, 3d mounted on the first and second molds 2 and 3, and the wall surface of the spiral cavity 6 for forming the coil spring S is continuously formed around the round bar type core 8 disposed in the through hole 5.

In the case of the molding device 1 shown in Fig. 5, the device of Fig. 1 is remarkably simplified to enhance the precision of the mold, and actually such a simplified device having high durability is used.

Next, the molds 2 and 3 and the slide cores will be described.

As is understandable from Figs. 2 and 3, the molds are disposed at the intermediate portions of the thin plate forming the coil spring S in the thickness direction in the following manner to form the cavity 6. That is, the molding portion 2a and each of the slide cores 2c are disposed to be engaged with each other so that the slide cores 2c are moved in the direction of the arrow Y1 while guided along the gaps formed in the molding portion 2a. Likewise, the molding portion 2b and each of the slide cores 2d are disposed to be engaged with each other so that the slide cores 2d are moved in the direction of the arrow Y2 while guided along the gaps formed in the molding portion 2b. Furthermore, the molding portion 3a and the slide cores 3c which are guided along the gaps formed in the molding portion 3a and moved upwardly as indicated by the arrow are disposed to be engaged with each other, and the molding portion 3b and the slide cores 3d which are guided along the gaps formed in the molding portion 3b and moved downwardly as indicated by the arrow are disposed to be engaged with each other.

As described above, the mold for forming one pitch of the coil spring S is constructed by different molds in the range of 90°. Furthermore, as shown in Fig. 3, in the thickness direction of the coil spring S, the cavity 6 whose spiral shape is divided in the range of 90° is formed in the mating faces of the molding portion 2b and the slide cores 2d, the mating faces of the molding portion 3b and the slide cores 3d, the mating faces of the molding portion 3a and the slide cores 3c, and the mating faces of the molding portion 2a and the slide cores 2c.

In this embodiment, since the coil spring S having a rectangular cross section in which the width is larger as compared with the thickness is formed, an undercut portion is formed every 90°, and thus two kinds of molds (the combination of the mold and the slide core) are arranged every 90°. As described above, noting the coil spring S of one pitch p shown in Fig. 3, the portions molded by the slide cores are arranged every 90°, and also the portions molded by the first and second molds 2 and 3 are arranged every 90° subsequently to the portions formed by the slide cores.

Parting lines are formed on the top faces of the coil spring S manufactured by the molding device 1, and it is apparent that the first mold 2 and the slide core 2c, 2d face each other and the second mold 3 and the slide core 3c, 3d face each other on the top faces.

Fig. 4 shows a state in which the generated coil spring S is taken out from the molding device 1 (the core 8 is omitted). As shown in Fig. 1, the molding portions 2a, 2b of the first mold 2 and the slide cores 2c, 2d are assembled, and likewise the various kinds of molds of the second mold 3 are assembled, whereby the spiral cavity 6 is formed around the core 8.

When the molding device 1 is set to the assembled state as described above, melt resin is injected into the molding device 1 from the nozzle 10 (Fig. 1) connected to an injection molding machine (not shown) under pressure, and the molding device 1 is kept for a predetermined time. When the mold is cooled to predetermined temperature, the respective molding members are released as shown in Fig. 1, and the coil spring S is taken out while it is molded around the core 8. Then, the peripheral surface of the core 8 which is divided into plural parts in the length direction are compressed and the coil spring S is taken out from the core 8.

Industrial resin having a high elastic efficiency such as polycarbonate, nylon or ABS may be used as the synthetic resin used for the coil spring. However, the injection molding may be carried out by using raw material which is achieved by mixing the above resin with discontinuous fiber such as carbon fiber or glass fiber, or metal whisker as occasion demands. In this case, a coil spring that also has high repulsive force can be molded.

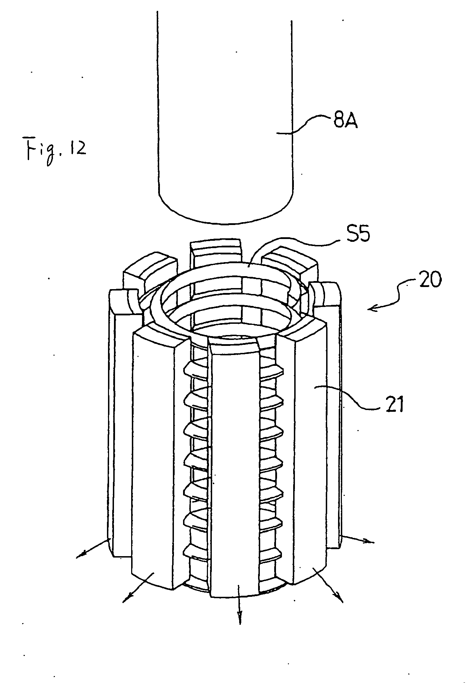

Fig. 12 is a perspective view showing a method of molding a coils spring S5 by a molding device 20 using no slide core as shown in Fig. 1. A spiral cavity is formed between a core 8A and an eight-segmentalized mold (segments) 21, and melt resin is injected into the cavity to mold the coil spring S5. In the case of this molding device, a four-segmentalized mold (segments) or a six-segmentalized mold (segments) may be sufficiently used.

Since the molding device 20 uses no slide core, and thus this molding device 20 is suitable for a case where a coil spring whose cross section has a relatively large slant surface such as a trapezoidal shape, a triangular shape or an arch-shape for avoiding an undercut portion is efficiently molded.

The synthetics resin coil springs that cannot be manufactured by the extrusionmolding methodcanbe also easilymanufactured: for example, coil springs having a flattened rectangular cross section, a trapezoidal cross section, an M-shaped (ribbon-shaped) cross-section having a concave on the top thereof (Fig. 9), a fan-shaped cross section or the like.

As shown in Fig. 7, a projection piece d may be formed at the end portion of the coil spring S1, or an additional member such as a cylindrical body B may be integrally molded in the coil spring.

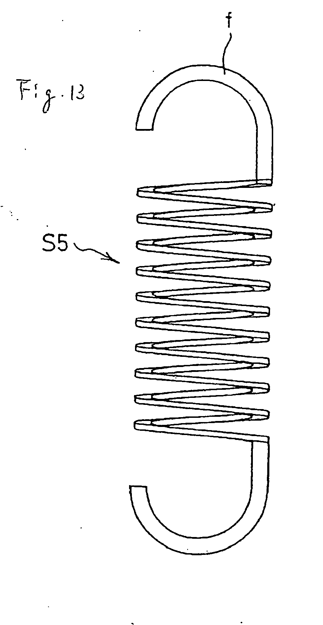

As shown in Fig. 13, a member having a different function such as a fixing piece like a hook f or the like may be integrally provided to each of both the ends of the coil spring S5.

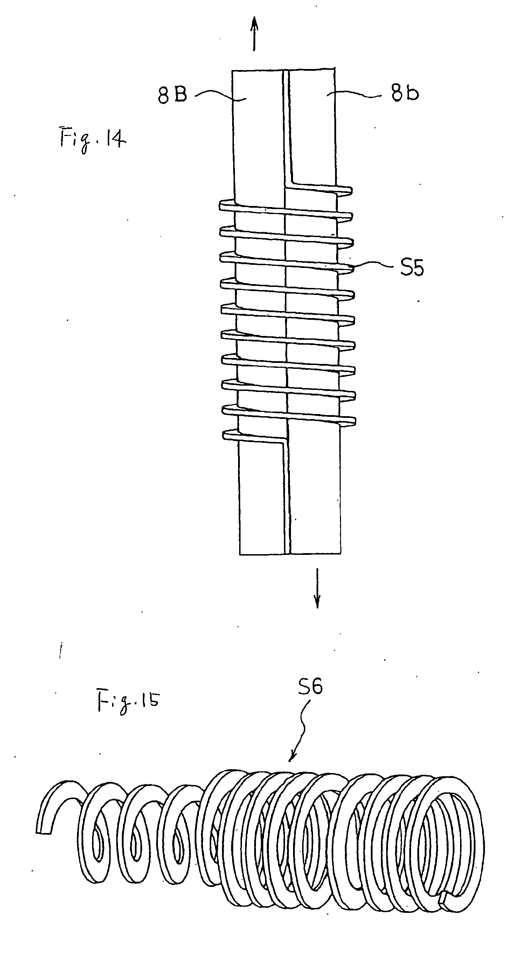

Fig. 14 shows two-segmentalized cores 8B and 8b to mold the coil spring S5. After the molding, the cores 8B and 8b are extracted as indicated by arrows, whereby the coil spring S5 shown in Fig. 13 can be taken out.

Furthermore, coil springs which can be used in the same manner as metal springs can be manufactured. That is, coil springs S3 and S4 which are remarkably larger in width as compared with the thickness thereof as shown in Figs. 10 and 11 and have been hitherto disabled to be manufactured can be manufactured. By mixing the material of the coil spring with reinforcing material such as carbon fiber, glass fiber, or metal whisker, synthetic resin material having high elastic efficiency can be made, and also a coil spring having the maximum section modulus can be easily manufactured.

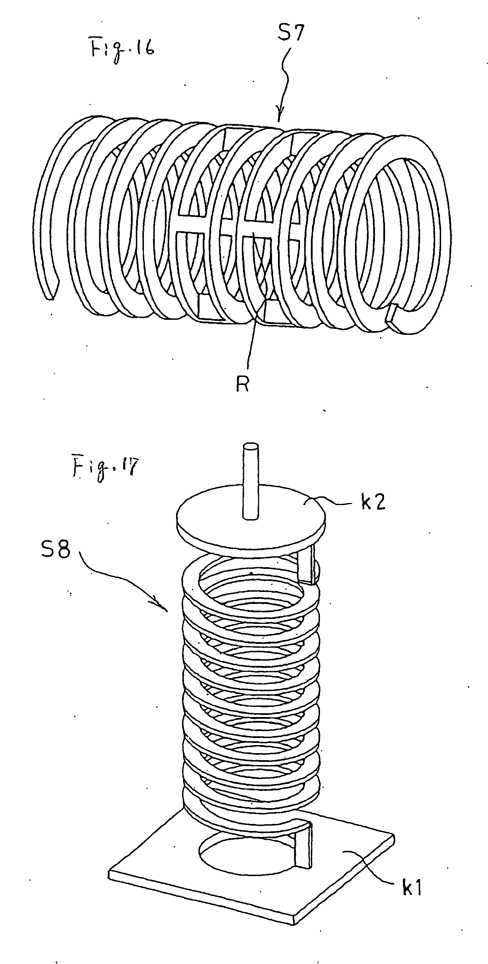

When the molding device shown in Fig. 1 is used, a coil spring whose thickness is not uniform, a coil spring S6 whose pitch is not uniform (Fig. 15), a spring S7 having a portion which does not serve as a coil spring by providing a coil-spring joint member R (Fig. 16) at an intermediate portion of the coil spring, or a coil spring S8 having a fixing member at an end portion thereof or an intermediate portion thereof may be integrally molded.

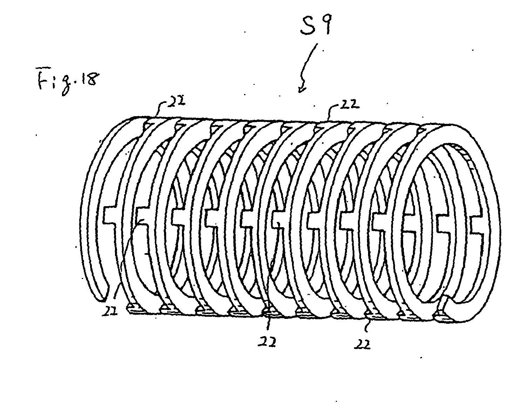

Furthermore, as shown in Fig. 18, according to the invention projection type spacers 22 may be integrally molded between the pitches of the coil spring S9. In this construction, when the coil spring S9 is used as a wasted toner feeding member for a copying machine or the like, it can be prevented that the pitches are clogged with toner because of deformation such as twist, and the coil spring S9 does not serve as a feeder.

Still furthermore, as shown in Fig. 17, there can be manufactured coil springs having the functions corresponding to various applications such as a coil spring that is provided with a fixing member k2 having a projecting short shaft and a stand plate k1 at both the ends thereof, respectively.

From the convenience of the working of the molding device, a coil spring having a spiral shape having a circular cross section is suitably used. Further, coil springs whose cross-sectional shapes are set to various kinds of shapes such as a rectangular shape, a hexagonal shape, and a octagonal shape in accordance with the application can be manufactured.

For example, in the case of the coil spring having the rectangular cross section, as shown in Figs. 10 and 11, coil springs which are changed in height/thickness ratio can be designed and manufactured in accordance with the application. Furthermore, a coil spring in which the height is remarkably larger as compared with the width to thereby enhance the elastic force can be easily manufactured in accordance with the application.

According to the coiled part formed of plastic material according to the present invention, particularly a coil spring formed of thermoplastic synthetic resin is targeted, and it is the main object to use the coiled part as an elastic element.

## Claims

1. A wasted toner feeding member for a copying machine or the like consisting of a coiled part formed of plastic material by injection molding, wherein the cross section of the coiled part (S9) has a polygonal shape having at least one corner portion or a rounded face at a part thereof, wherein each coil is integrally provided with a projecting spacer (22) along the axial direction so that a gap interval between the coils is kept.

2. The wasted toner feeding member according to claim 1, wherein the polygonal shape is one of a triangular shape, a rectangular shape, a hexagonal shape and an octagonal shape.

3. The wasted toner feeding member according to claim 1 or 2, wherein the plastic material is thermoplastic synthetic resin.

## Patentansprüche

1. Resttonerzuführelement für ein Kopiergerät oder dergleichen, bestehend aus einem durch Spritzguss aus Kunststoffmaterial gebildeten gewendelten Teil, wobei der Querschnitt des gewendelten Teils (S9) eine polygonale Form mit wenigstens einem Eckabschnitt oder einer gerundeten Fläche an einem Teil von dieser aufweist, wobei jede Windung einstückig mit einem vorstehenden Abstandsstück (22) längs der Axialrichtung versehen ist, so dass ein Spaltabstand zwischen den Windungen beibehalten wird.

2. Resttonerzuführelement nach Anspruch 1, wobei die polygonale Form eine dreieckige Form, eine rechteckige Form, eine sechseckige Form oder eine achteckige Form ist.

3. Resttonerzuführelement nach Anspruch 1 oder 2, wobei das Kunststoffmaterial thermoplastisches Kunstharz ist.

## Revendications

1. Élément d'alimentation de toner perdu pour une machine à photocopier ou similaire consistant en une partie en spirale formée d'un matériau plastique par moulage par injection, dans lequel la coupe transversale de la partie en spirale (S9) a une forme polygonale ayant au moins une partie en coin ou une face arrondie au niveau d'une partie de celle-ci, dans lequel chaque spirale est prévue de façon intégrale avec un espaceur en saillie (22) dans le sens axial de telle sorte qu'un intervalle d'espace entre les spirales est maintenu.

2. Élément d'alimentation de toner perdu selon la revendication 1, dans lequel la forme polygonale est l'une d'une forme triangulaire, d'une forme rectangulaire, d'une forme hexagonale et d'une forme octogonale.

3. Élément d'alimentation de toner perdu selon la revendication 1 ou 2, dans lequel le matériau plastique est une résine synthétique thermoplastique.
